# EUROPÄISCHE PATENTSCHRIFT

(11) **EP 3 424 693 B1**
(45) Veröffentlichungstag und Bekanntmachung des Hinweises auf die Patenterteilung: **13.05.2020**
(21) Anmeldenummer: 18163523.6
(22) Anmeldetag: 23.03.2018
(51) Int. Cl.: B29D 30/00

(54) **VORRICHTUNG UND VERFAHREN ZUR BEREITSTELLUNG VON ROHREIFEN MIT ZUMINDEST EINEM DURCH ELEKTRONENSTRAHLEN VORVERNETZTEN, ZUMINDEST EINE KAUTSCHUKMISCHUNG AUFWEISENDEN REIFENBAUTEIL**
DEVICE AND METHOD FOR PROVIDING RAW TYRES WITH AT LEAST ONE TYRE COMPONENT PRE-CROSSLINKED WITH ELECTRON BEAMS, AT LEAST ONE RUBBER MIXTURE
DISPOSITIF ET PROCÉDÉ DE FOURNITURE DU PNEU CRU DOTÉ D'AU MOINS UN COMPOSANT DE PNEU COMPORTANT AU MOINS UN MÉLANGE DE CAOUTCHOUC À PRÉ-RÉTICULATION PAR FAISCEAUX D'ÉLECTRONS

(30) Priorität: 21.06.2017 DE 102017210332
(43) Veröffentlichungstag der Anmeldung: 09.01.2019
(73) Patentinhaber: Continental Reifen Deutschland GmbH, 30165 Hannover (DE)
(72) Erfinder: Reitmann, Sebastian, 31558 Hagenburg (DE); Huth, André, 04654 Frohburg (DE); Schürer, Thomas, 04207 Leipzig (DE); Thiemicke, Ulf, 04229 Leipzig (DE)
(74) Vertreter: Finger, Karsten

(56) Entgegenhaltungen:
- DE-A1-102012 105 730
- DE-A1-102015 221 511

## Beschreibung

Die Erfindung betrifft eine Vorrichtung und ein Verfahren zur Bereitstellung von Rohreifen mit zumindest einem durch Elektronenstrahlen vorvernetzten, zumindest eine Kautschukmischung aufweisenden Reifenbauteil.

Bei der Reifenherstellung ist es bekannt, aus Kautschukmischungen gefertigte Reifenbauteile mittels Elektronenstrahlen oberflächlich vorzuvernetzen. Die Elektronenstrahlquelle wird beispielsweise direkt an dem die jeweilige Kautschukmischung extrudierenden Rollerhead-Extruder angeordnet, sodass die Vorvernetzung unmittelbar nach der Extrusion erfolgt. Die vorvernetzten Reifenbauteile weisen gegenüber den aus "rohen" Kautschukmischungen gefertigten Reifenbauteilen eine reduzierte Fließfähigkeit und eine reduzierte Klebrigkeit auf.

Eine Vorrichtung und ein Verfahren der eingangs genannten Art sind beispielsweise aus der DE 10 2015 221 511 A1 bekannt. Die Vorrichtung umfasst eine Hauptkammer, an deren gegenüberliegenden Seiten eine Eingangsschleuse und eine Ausgangsschleuse angrenzen. Ferner grenzt an Hauptkammer die Bestrahlungsquelle an. Das Handling der Rohreifen innerhalb der Hauptkammer erfolgt mittels einer drehbar angeordneten Greifeinrichtung, welche die Rohreifen von oben erfasst.

Die bislang bekannten Verfahren und Vorrichtungen sind insbesondere hinsichtlich der Auslastung der die Elektronenstrahlen erzeugenden Strahlungsquelle nicht zufriedenstellend. Auch die Handhabung der Rohreifen innerhalb der bekannten Bestrahlungskammern ist verbesserungsbedürftig, vor allem um eine reproduzierbare Vorvernetzung der Rohreifen sicherzustellen sowie etwaige Beschädigungen an der Vorrichtung während des Betriebes zu vermeiden.

Der Erfindung liegt daher die Aufgabe zu Grunde eine derartige Vorrichtung und ein derartiges Verfahren zur Verfügung zu stellen.

Eine die gestellte Aufgabe lösende erfindungsgemäße Vorrichtung umfasst:
- ein Strahlenschutzgehäuse mit einer Bestrahlungskammer mit einer Elektronenstrahlquelle und zwei an einer Seite der Bestrahlungskammer angrenzende Schleusen,
- eine Schlittenanordnung pro Schleuse, wobei jede Schlittenanordnung einen Kreuzschlitten und einen Bestrahlungsschlitten umfasst, wobei sich die Kreuzschlitten unter dem Niveau der Schleusen zwischen den Schleusen und der Bestrahlungskammer erstrecken und zur Elektronenstrahlquelle verfahrbar sind, wobei die Bestrahlungsschlitten am und gegenüber dem Kreuzschlitten verschiebbar und derart zwischen der jeweiligen Schleuse und der Bestrahlungskammer bewegwegbar sind und
   wobei auf jedem Bestrahlungsschlitten eine rotierbare Schnellwechselaufnahme zur Aufnahme eines auf einem Werkstückgreifer in Torusform aufgespannten Rohreifens aufgesetzt ist,
- Fördereinrichtungen zum An- und Abtransport der Rohreifen,
- Greifeinrichtungen zur gleichzeitigen Handhabung mehrerer Rohreifen und Werkstückgreifer zwischen den Schleusen und den Fördereinrichtungen.

Was das Verfahren betrifft, wird die gestellte Aufgabe durch folgende nacheinander ablaufende Schritte gelöst:
a. Abwechselndes Positionieren einzelner Rohreifen in einer ersten und einer zweiten Schleuse, welche jeweils an eine Bestrahlungskammer angrenzt,
b. Einbringen eines Rohreifens aus der ersten Schleuse in die Bestrahlungskammer,
c. Positionieren des in die Bestrahlungskammer eingebrachten Rohreifens vor einer Elektronenstrahlquelle und Vorvernetzen des Rohreifens durch Bestrahlen mit Elektronenstrahlen,
d. Rücktransport des vorvernetzten Rohreifens in die erste Schleuse und gleichzeitiges Einbringen eines weiteren Rohreifens aus der zweiten Schleuse in die Bestrahlungskammer,
e. Vorvernetzen des weiteren Rohreifens gemäß Schritt c) und Abtransport des bereits vorvernetzten Rohreifens aus der ersten Schleuse,
f. Zurücktransportieren des weiteren vorvernetzten Rohreifens in die zweite Schleuse und nachfolgender Abtransport des weiteren Rohreifens aus der zweiten Schleuse,
g. Wiederholung der Schritte a) bis f) bei weiteren Rohreifen.

Bei der erfindungsgemäßen Vorrichtung sind die Rohreifen innerhalb der Bestrahlungskammer sowie zwischen der Bestrahlungskammer und den Schleusen mittels spezieller Schlittenanordnungen transportierbar. Die Funktion solcher, vorrangig auf mechanische Weise aufbaubaren Schlittenanordnungen wird von Röntgenstrahlung, welche bei der Abbremsung der Elektronen aus der Elektronenstrahlquelle frei wird, nicht beeinflusst.

Jede Schlittenanordnung umfasst einen Kreuzschlitten und einen auf diesem verschiebbaren Bestrahlungsschlitten. Die Bestrahlungsschlitten sind mit rotierbaren Schnellwechselaufnahmen versehen, auf welchen auf Werkstückgreifern aufgespannte Rohreifen sicher erfassbar sind. Durch das Aufspannen der Rohreifen auf den Werkstückgreifern sind die meist wenig formstabilen Rohreifen vor der Elektronenstrahlbehandlung wieder in ihre Torusform bringbar. Da die Rohreifen tragenden Werkstückgreifer innerhalb des Strahlenschutzgehäuses und damit auch innerhalb der Bestrahlungskammer auf Schnellwechselaufnahmen positioniert sind, ist zusätzlich auch eine zuverlässige Handhabung der Rohreifen innerhalb der Bestrahlungskammer und der Schleusen sichergestellt.

Da die Schnellwechselaufnahmen ferner in Rotationsbewegung versetzbar sind und sich jeder Rohreifen während der Bestrahlung in einer genau definierten Entfernung vor der Elektronenstrahlquelle befinden, ist eine gleichmäßige und reproduzierbare Vorvernetzung der Rohreifen gewährleistet.

Die Schlittenanordnungen ermöglichen ferner eine kompakte Bauweise der wechselseitig über zwei Schleusen beschickbaren Bestrahlungskammer. Außerhalb der Bestrahlungskammer erfolgt das Handling der Rohreifen bzw. der Werkstückgreifer mit Greifeinrichtungen, mittels welchen die Schleusen mit Rohreifen beschickbar und aus welchen diese, nach der Elektronenbestrahlung, wieder abtransportierbar sind.

Durch das erfindungsgemäße Verfahren, bei welchem die Bestrahlungskammer wechselseitig über die beiden Schleusen mit einzelnen Rohreifen beschickt werden, ist eine optimale Auslastung der Elektronenstahlquelle sichergestellt.

Gemäß einer bevorzugten Ausführungsvariante ist die rotierbare Schnellwechselaufnahme mit einem, insbesondere über Zahnstangen oder Kardanwellen ankoppelbaren Antrieb um die Hauptachse des Reifens in Rotationsbewegung versetzbar. Zum Schutz des Antriebes vor Strahlung, ist es bevorzugt, wenn der Antrieb außerhalb der Bestrahlungskammer angeordnet ist. Die Übertragung der für die Rotationsbewegung erforderlichen Energie vom Antrieb zur Schnellwechselaufnahme erfolgt innerhalb des Strahlenschutzgehäuses über mechanische und daher strahlungsresistent ausführbare Bauteile.

Die Schlittenanordnung ist auf besonders genaue Weise verfahrbar, wenn gemäß einer weiteren bevorzugten Ausführungsvariante durch den Kreuzschlitten und den Bestrahlungsschlitten jeder Schlittenanordnung zumindest eine in Rotationsbewegung versetzbare Gewindespindel durchgeführt ist, durch deren Rotationsbewegung jeder Schlitten der Schlittenanordnung verfahrbar ist. Mittels der durch den Bestrahlungsschlitten verlaufenden Gewindespindel ist der Abstand zwischen dem am Bestrahlungsschlitten auf dem Werkstückgreifer befindlichen Rohreifen zur Elektronenstrahlquelle besonders exakt einstellbar, sodass Rohreifen unterschiedlicher Dimensionen besonders gleichmäßig vorvernetzt werden. Bevorzugter Weise ist jeder Schlitten der Schlittenanordnung mittels eines außerhalb des Strahlenschutzgehäuses befindlichen Antriebes in Bewegung versetzbar ist.

Hinsichtlich des Strahlenschutzes ist es von Vorteil, wenn in der Bestrahlungskammer unmittelbar hinter den Schleusen jeweils eine insbesondere aus Blei bestehende verschiebbare Abdeckplatte angeordnet ist, mittels welcher bei in der Schleuse befindlichem Bestrahlungsschlitten der in der Bestrahlungskammer befindliche Teil des Kreuzschlittens abdeckbar ist.

Die Schleusen der Bestrahlungskammer sind besonders zügig mit Rohreifen beschickbar, wenn gemäß einer bevorzugten Ausführungsvariante vor den Schleusen zwei Übergabetische anordnet sind, auf welchen die Rohreifen, insbesondere jeweils zwei Rohreifen, auf den Werkstückgreifern positionerbar sind. Der Durchsatz durch die Bestrahlungskammer kann derart erhöht werden.

Gemäß einer bevorzugten Ausführungsvariante weist die Vorrichtung Lagertische auf, auf welchen mehrere, insbesondere zumindest drei, Werkstückgreifer nebeneinander lagerbar sind. Die Werkstückgreifer sind in unterschiedlichen, auf die Zollgrößen der Reifen abgestimmten Größen verfügbar, wobei vorzugsweise von jedem Werkstückgreifer Rohreifen in einem definierten Zollgrößenbereich erfassbar sind. Der für den jeweiligen Rohreifen geeignete Werkstückgreifer steht derart sofort zur Verfügung.

Bevorzugter Weise sind die Greifeinrichtungen rotierbar, insbesondere schwenkbar, und weisen Handhabungseinheiten zur gleichzeitigen Handhabung von Rohreifen und Werkstückgreifer auf. Eine Greifeinrichtung kann daher den Rohreifen erfassen und während sie den Rohreifen festhält einen geeigneten Werkstückgreifer aufnehmen.

Im Hinblick auf das Verfahren ist es von Vorteil, wenn in Schritt c) der Rohreifen während des Bestrahlens rotiert wird. Derart wird eine besonders gleichmäßig Vorvernetzung erreicht.

Die Rohreifen werden während der Schritte a) bis f) des Verfahrens auf eine besonders genau und sichere Weise transportiert und bestrahlt, wenn sie vor Schritt a) auf Werkstückgreifern aufgespannt werden und während der Schritte a) bis f) auf den Werkstückgreifern aufgespannt bleiben, welche innerhalb der Schleusen und innerhalb der Bestrahlungskammer in Schnellwechselaufnahmen eingesetzt mittels einer Schlittenanordnung transportiert werden.

Bevorzugter Weise werden die ausgeschleusten vorvernetzten Rohreifen von den Werkstückgreifern abgenommen und abtransportiert.

Weitere Merkmale, Vorteile und Einzelheiten der Erfindung werden nun anhand der Zeichnung, die schematisch ein Ausführungsbeispiel der Erfindung darstellt, näher beschrieben. Dabei zeigen
Fig. 1 eine schematische Darstellung einer erfindungsgemäßen Vorrichtung in Draufsicht,
Fig. 2 eine Schnittdarstellung entlang der Linie II-II der Fig. 1 und
Fig. 3 eine kombinierte Schnitt/Seitenansicht entsprechend der Linie III-III der Fig. 1.

Die Erfindung befasst sich mit einer Vorrichtung zur Bereitstellung von Rohreifen mit zumindest einem durch Elektronenstrahlen vorvernetzten, zumindest eine Kautschukmischung aufweisenden Reifenbauteil. Der Reifenbauteil, welcher vorvernetzt wird, ist insbesondere der Laufstreifen. Ferner werden vorzugsweise zusätzlich auch die Seitenwände vorvernetzt.

In der nachfolgenden Beschreibung verwendete Positionsbezeichnungen wie oben, unten, links, rechts und dergleichen beziehen sich auf die Lage der einzelnen Bestandteile der Vorrichtung wie in den Figuren gezeigt.

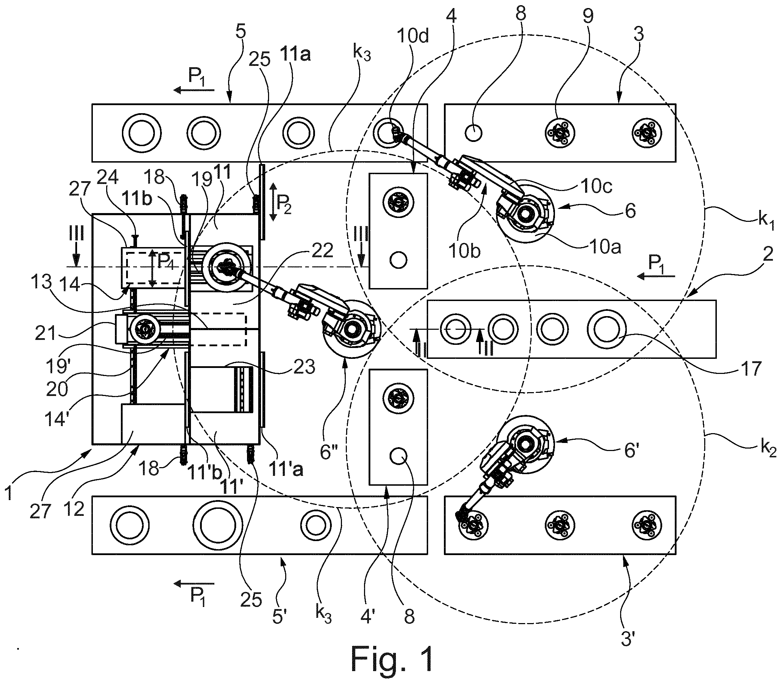

Die in Fig. 1 gezeigte Vorrichtung weist ein Strahlenschutzgehäuse 1, einen Zubringer 2, zwei Lagertische 3, 3', zwei Übergabetische 4, 4', zwei Fördereinrichtungen 5, 5' und drei Greifeinrichtung 6, 6', 6" auf.

Der Zubringer 2, die Lagertische 3, 3' und die Fördereinrichtungen 5, 5' sind in Draufsicht langgestreckte und parallel zueinander ausgerichtete Bauteile, wobei die Fördereinrichtung 5 in Fortsetzung der Längserstreckung des Lagertisches 3, die Fördereinrichtung 5' in Fortsetzung der Längserstreckung des Lagertisches 3' und der Zubringer 2 mittig zwischen dem Lagertisch 3 und dem Lagertisch 3' positioniert sind. Die Übergabetische 4, 4' befinden sich in Draufsicht zwischen jenen Endbereichen der Fördereinrichtungen 5, 5', welche bei den Lagertischen 3, 3' liegen, sowie ferner vor dem Strahlenschutzgehäuse 1 und erstrecken sich senkrecht zu den Fördereinrichtungen 5, 5'. Der Zubringer 2 endet in Draufsicht knapp vor den Übergabetischen 4, 4'. Das Strahlenschutzgehäuse 1 befindet sich in Draufsicht zwischen den Fördereinrichtungen 5, 5'.

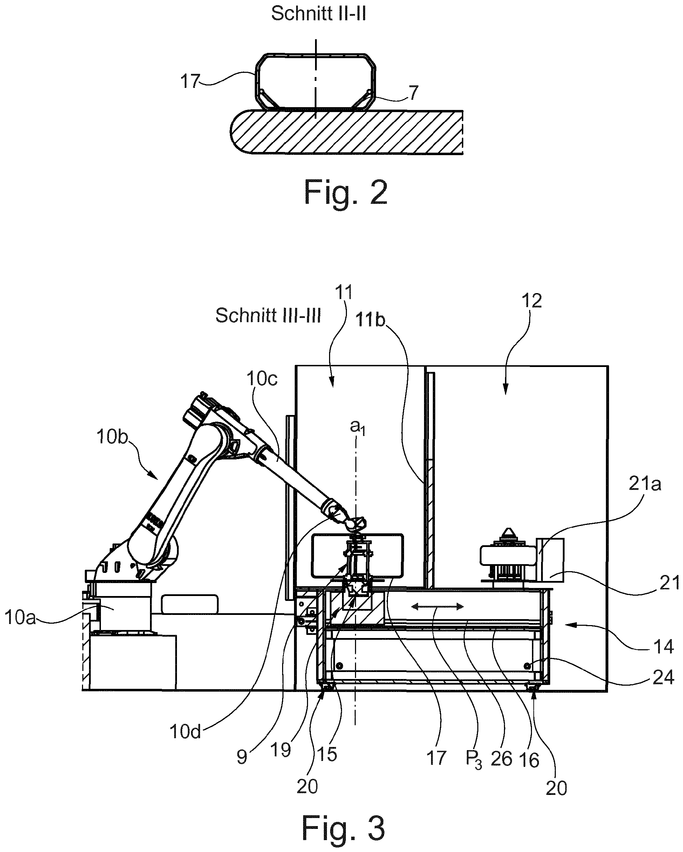

Der Zubringer 2 und die Fördereinrichtungen 5, 5' sind insbesondere Rollenförderer mit zwei nebeneinander angeordneten Reihen aus einer Vielzahl jeweils parallel zueinander ausgerichteter Rollen, auf welchen Rohreifen 27 liegend transportiert werden. Die Transportrichtung des Zubringers 2 und der Fördereinrichtungen 5, 5' ist jeweils durch einen Pfeil P₁ gekennzeichnet. Der Zubringer 2 weist an seinem bei den Übergabetischen 4, 4' liegenden Endbereich eine Zentriervorrichtung mit mindestens zwei, insbesondere vier, zwischen den Rollenreihen bzw. den Rollen durchgeführten und auseinanderfahrbaren Zentrierfingern 7 auf (Fig. 2). Sind die Zentrierfinger 7 zusammengefahren, befinden sich diese unterhalb des Niveaus der Rollen, sodass ein Rohreifen 17 durch entsprechendes Anhalten des Zubringers 2 über der Zentriervorrichtung positioniert wird. Durch Auseinanderfahren der Zentrierfinger 7 sind die Rohreifen 17 nacheinander mittig am Zubringer 2 positionierbar und ein etwaig zusammengefallener Rohreifen 17 dabei gleichzeitig in eine entsprechende Torusform bringbar. Die zentrierten Rohreifen 17 werden anschließend von der Greifeinrichtungen 6 bzw. 6', wie noch erläutert wird, aufgenommen.

Die Lagertische 3, 3' weisen an ihrer Oberseite jeweils vorzugsweise drei Ausnehmungen 8, die Übergabetische 4, 4' weisen an ihrer Oberseite jeweils vorzugsweise zwei Ausnehmungen 8 auf. In jeder Ausnehmung 8 ist ein Werkstückgreifer 9 positioniert, wobei die Werkstückgreifer 9 in unterschiedlichen auf die Zollgrößen der Reifen abgestimmten Größen verfügbar und mit den Greifeinrichtungen 6, 6', 6", wie noch erläutert wird, transportierbar sind. Jeder Werkstückgreifer 9 kann Rohreifen 17 über einen gewissen Zollgrößenbereich, beispielsweise von 13 Zoll bis 18 Zoll, von größer 18 Zoll bis 21 Zoll und von größer 21 Zoll bis 24 Zoll, erfassen. Die Werkstückgreifer 9 können an den Lagertischen 3, 3' gegen andere für weitere Reifendimensionen vorgesehene Werkstückgreifer ausgetauscht werden.

Die Greifeinrichtungen 6, 6', 6" weisen jeweils eine ortsfeste Basis 10a mit einem auf dieser rotierbar, insbesondere schwenkbar, angeordnetem Greifarm 10b auf. Die Basis 10a der Greifeinrichtung 6 befindet sich zwischen dem Lagertisch 3 und dem Zubringer 2, die Basis 10a der Greifeinrichtung 6' befindet sich zwischen dem Lagertisch 3' und dem Zubringer 2 und die Basis 10a der Greifeinrichtung 6" zwischen dem Zubringer 2 und dem Strahlenschutzgehäuse 1. Jeder Greifarm 10b weist zwei aneinander angelenkte Armsegmente 10c auf, welche in bekannter Weise in einer Ebene relativ zueinander sowie relativ zur Basis 10a schwenkbar sind, wobei am freien Ende des einen Armsegmentes 10c jeweils eine Handhabungseinheit 10d angeordnet ist. Die Handhabungseinheit 10d verfügt über eine Schnellwechselschnittstelle, über welche die Handhabungseinheit 10d schnell und einfach derart anpassbar ist, dass mit ihr ein Werkstückgreifer 9 oder ein Rohreifen 17 aufnehmbar ist oder auch gleichzeitig sowohl einen Werkstückgreifer 9 als auch einen Rohreifen 17 aufnehmen. Ferner ist mittels der Handhabungseinheit 10d ein auf einen Werkstückgreifer 9 gelegter Rohreifen 17 auf dem Werkstückgreifer 9 aufspannbar. Außerdem kann die Handhabungseinheit 10d auch Werkstückgreifer 9 mitsamt aufgespannten Rohreifen 17 aufnehmen. Durch Aufspannen der Rohreifen 17 auf den Werkstückgreifern 9 werden die Rohreifen 17 während des Verfahrens in ihrer Form gehalten. Wie noch erläutert wird, werden die Rohreifen 17 erst nach dem Bestrahlen mit Elektronenstrahlen wieder von den Werkstückgreifern 9 abgenommen, welche hierzu mittels jeweils einer Handhabungseinheit 10d einer Greifeinrichtung 6, 6', 6" wieder entspannt werden.

Werkstückgreifer 9 und/oder Rohreifen 17 werden daher durch die Handhabungseinheit 10d einer Greifeinrichtung 6, 6', 6" und entsprechendes Schwenken der Greifeinrichtung 6, 6', 6" transportiert. Wie durch den in Fig. 1 oberen Kreis k₁ angedeutet ist, sind mittels der Greifeinrichtung 6 Werkstückgreifer 9 und/oder Rohreifen 17 zwischen dem Zubringer 2, dem Lagertisch 3, dem Übergabetisch 4 und der Fördereinrichtung 5 transportierbar. Analoges gilt für die Greifeinrichtung 6', angedeutet durch den in Fig. 1 unteren Kreis k₂, mittels welcher Werkstückgreifer 9 und/oder Rohreifen 17 zwischen dem Zubringer 2, dem Lagertisch 3', dem Übergabetisch 4' und der Fördereinrichtung 5' transportierbar sind. Der in Fig. 1 linke Kreis k₃ deutet die Transportfunktion der Greifeinrichtung 6" an, mittels welcher Rohreifen 17 tragende Werkstückgreifer 9 von einem der Übergabetische 4, 4' ins Strahlenschutzgehäuse 1 und von dort wieder zurück zu den Übergabetischen 4, 4' transportiert werden.

Das Strahlenschutzgehäuse 1 weist zwei Schleusen 11, 11' und eine Bestrahlungskammer 12 auf, wobei die beiden Schleusen 11 ,11' an dieselbe Seite der Bestrahlungskammer 12 anschließen, voneinander durch eine Wand 13 getrennt und ferner den Übergabetischen 4, 4' zugewandt sind.

Innerhalb der Bestrahlungskammer 12 ist in deren mittleren Bereich eine Elektronenstrahlquelle 21 mit einem für Elektronenstrahlen durchlässigen Bestrahlungsfenster 21a (Fig. 3) angeordnet. Das Bestrahlungsfenster 21a ist, wie an sich bekannt, eine insbesondere 10µm bis 50 µm dicke und entsprechend elektronendurchlässige Folie. Mittels der Elektronenstrahlquelle 21 werden die aus Kautschukmischungen gefertigten Reifenbauteile eines vor der Elektronenstrahlquelle 21 positionierten Rohreifens 17 vorvernetzt. Vor der Elektronenstrahlquelle 21 kann eine Abschirmeinrichtung (in den Figuren nicht gezeigt) angeordnet sein, mittels welcher gezielt Bauteile bzw. definierte Bereiche des Rohreifen,s beispielsweise die Seitenwände, ein Seitenwandbereich oder ein Spleißbereich, während der Elektronenstrahlbehandlung abgeschirmt werden.

Jede Schleuse 11, 11' weist ein äußeres Schleusentor 11a, 11'a und zur Bestrahlungskammer 12 ein inneres Schleusentor 11b, 11'b auf. Die äußeren Schleusentore 11a, 11'a sind jeweils in horizontaler Richtung verschiebbar, wie durch den Doppelpfeil P₂ für das äußere Schleusentor 11a der in Fig. 1 oberen Schleuse 11 angedeutet. Die inneren Schleusentore 11b, 11'b sind vorzugsweise jeweils in vertikaler Richtung verschiebbar. In den Schleusen 11, 11' ist eine sich unterhalb der Wand 13 erstreckende, in einer horizontalen Ebene befindliche Bleiplatte 22 angeordnet, welche den "Boden" der Schleusen 11, 11' bildet und innerhalb der Schleusen 11, 11' jeweils mit einer in Draufsicht rechteckigen Aussparung 23 versehen ist.

Innerhalb des Strahlenschutzgehäuses 1 sind zwei verfahrbare Schlittenanordnungen positioniert, welche jeweils einen Kreuzschlitten 14, 14' und einen Bestrahlungsschlitten 19, 19' umfassen. Die Kreuzschlitten 14, 14' befinden sich unter der Bleiplatte 22 der Schleusen 11, 11' und erstrecken sich unter dem Niveau der inneren Schleusentore 11b, 11'b in die Bestrahlungskammer 12 hinein (für Kreuzschlitten 14 siehe auch Fig. 3). Jeder Kreuzschlitten 14, 14' befindet sich zirka zur Hälfte im Bereich der Schleusen 11, 11' und zirka zur Hälfte im Bereich der Bestrahlungskammer 12. Wie Fig. 3 für den Kreuzschlitten 14 zeigt, sind die beiden Kreuzschlitten 14, 14' auf zwei am Boden des Strahlenschutzgehäuses 1 befindlichen Schienen 20, welche sich parallel zueinander sowie parallel zu den Schleusentoren 11a, 11'a, 11b, 11'b erstrecken, angeordnet, wobei sich die eine Schiene 20 im Bereich der Bestrahlungskammer 12 und die andere Schiene 20 im Bereich der beiden Schleusen 11, 11' befindet. Die Kreuzschlitten 14, 14' sind entlang der Schienen 20 verschiebbar. In jedem Kreuzschlitten 14, 14' sind am unteren Endbereich zwei in Querrichtung durch den jeweiligen Kreuzschlitten 14, 14' durchgehende Innengewinde ausgebildet, durch welche jeweils eine Gewindespindel 24 durchgeführt ist. In Fig. 1 sind die in der Bestrahlungskammer 12 liegenden Gewindespindel 24 teilweise zu sehen, die im Bereich der Schleusen 11, 11' befindliche Gewindespindeln 24 sind durch die Bleiplatte 22 verdeckt. Außerhalb des Strahlenschutzgehäuse 1 ist an den den Fördereinrichtungen 5, 5' zugewandten Seiten des Strahlenschutzgehäuses 1 im Bereich der inneren Schleusentore 11b, 11'b jeweils ein Antrieb 18 angeordnet. Der in Fig. 1 obere Antrieb 18 ist an eine der Gewindespindeln 24 des Kreuzschlittens14, der in Fig. 1 untere Antrieb 18 ist an eine der Gewindespindeln 24 des Kreuzschlittens 14' angekoppelt. Die Kraftübertragung zwischen den Antrieben 18 und den Gewindespindeln 24 erfolgt über üblich Kraftübertragungselemente, wie beispielsweise, Kettenantriebe,

Gelenkwellensysteme, Kardanwellen oder Ketten-Zahnrad-Anordnungen. Wie in Fig. 1 durch den Doppelpfeil P₄ angedeutet ist, ist durch Betätigen des oberen Antriebes 18 die eine durch den Kreuzschlitten 14 geführte Gewindespindel 24 in Rotationsbewegung versetzbar, wodurch der Kreuzschlitten 14 entlang der Schienen 20 verschiebbar ist. Auf analoge Weise ist durch Betätigen des unteren Antriebes 18' der Kreuzschlitten 14' entlang der Schienen 20 verschiebbar.

Jeder Kreuzschlitten 14, 14' ist an seiner Oberseite rahmenartig ausgespart und weist dort in seinem Inneren eine oder mehrere entlang seiner Erstreckungsrichtung ausgerichtete, sich parallel zum Untergrund erstreckende Schiene(n) 16 auf (Fig. 3), auf welcher bzw. welchen der Bestrahlungsschlitten 19, 19' verschiebbar angeordnet ist. Wie Fig. 3 für den Kreuzschlitten 14 zeigt, erstrecken sich die Schienen 16 im Wesentlichen über die gesamte Länge des Kreuzschlittens 14, 14'. Auf jedem Bestrahlungsschlitten 19, 19' ist eine rotierbare Schnellwechselaufnahme 15 aufgesetzt (Fig. 3), auf welche ein Werkstückgreifer 9 inklusive aufgespanntem Rohreifen 17, dessen Transport zur Schleuse 11, 11', wie bereits erwähnt, mit der Greifeinrichtung 6" erfolgt, positionierbar ist. Außerhalb des Strahlenschutzgehäuse 1 sind an den den Fördereinrichtungen 5, 5' zugewandten Seiten des Strahlenschutzgehäuses 1 im Bereich der äußeren Schleusentore 11a, 11'a übereinander jeweils zwei Antriebe 25 angeordnet, von welchen in Fig. 1 jeweils nur einer zu sehen ist. Jeweils einer der Antriebe 25 ist an eine durch den Bestrahlungsschlitten 19 bzw. 19' geführte nahe der jeweiligen Schiene 16 befindliche Gewindespindel 26 (in Fig. 3 schematisch eingezeichnet) angekoppelt und kann diese in Rotationsbewegung versetzen, wodurch der Bestrahlungsschlitten 19, 19' entlang der Schiene(n) 16 relativ zum Kreuzschlitten 14, 14' und daher bei geöffnetem inneren Schleusentor 11b, 11'b zwischen der jeweiligen Schleuse 11, 11' und der Bestrahlungskammer 12 verfahren wird. Die Ankopplung dieser Antriebe 25 an die jeweilige Gewindespindel 26 erfolgt analog zur Ankopplung des jeweiligen Antriebes 18 an die Gewindespindeln 24 des jeweiligen Kreuzschlittens 14, 14'.

Der jeweils andere Antrieb 25 ist auf nicht gezeigte Weise an die Schnellwechselaufnahme 15 des Bestrahlungsschlitten 19, 19' angekoppelt, insbesondere über Wellen, beispielsweise Keilwellen, und kann diese um eine vertikale Achse a₁ (Fig. 3), welche mit der Hauptachse des Rohreifens 17 zusammenfällt, in Rotationsbewegung versetzen.

Wie Fig. 1 zeigt, ist in der Bestrahlungskammer 12 unmittelbar hinter den inneren Schleusentoren 11b, 11'b jeweils eine Abdeckplatte 27 angeordnet. Die Abdeckplatten 27 bestehen aus Blei und sind in horizontaler Ebene senkrecht zu den inneren Schleusentoren 11b, 11'b verschiebbar. Ist der Kreuzschlitten 14, 14' derart verfahren, dass er sich unterhalb des inneren Schleusentores 11b, 11'b erstreckt und befindet sich der zu diesem Kreuzschlitten 14, 14' gehörende Bestrahlungsschlitten 19, 19' in der zugehörigen Schleuse 11, 11' ist die jeweilige Abdeckplatte 26 derart verschoben, dass sie den in der Bestrahlungskammer 1 befindlicher Teil des Kreuzschlittens 14, 14' von oben abdeckt. Dies ist in Fig. 1 gerade für den oberen Kreuzschlitten 14 der Fall. In dem in Fig.1 gezeigten Verfahrenszustand kann daher das äußere Schleusentor 11a der oberen Schleuse 11 geöffnet werden, ohne dass Strahlung aus dem Strahlenschutzgehäuse 1 entweicht. Sind die Abdeckplatten 27 zur Seite geschoben, kann der Bestrahlungsschlitten 19, 19' bei geöffnetem inneren Schleusentor 11b, 11'b zwischen der jeweiligen Schleuse 11, 11' und der Bestrahlungskammer 12 verfahren werden. Durch nachfolgendes Verschieben des Kreuzschlittens 14, 14' wird der Bestrahlungsschlitten 19, 19' und damit der auf der zugehörigen Schnellwechselaufnahme 15 rotierende Rohreifen 17 vor dem Bestrahlungsfenster 21a der Elektronenstrahlquelle 21 positioniert. Über die jeweilige Gewindespindel 26 (Fig. 3) ist dabei der Bestrahlungsschlitten 19, 19' am Kreuzschlitten 14, 14'derart verfahrbar, dass Rohreifen unterschiedlicher Dimensionen immer in einem gleich großen oder im Wesentlichen gleich großen Abstand vor dem Bestrahlungsfenster 21a der Elektronenstrahlquelle 21 postionierbar sind. Es ist daher eine gleichmäßige Vernetzung von Rohreifen unterschiedlichen Dimensionen möglich. In dem in Fig. 1 gezeigten Verfahrenszustand ist gerade der Kreuzschlitten 14 und der Bestrahlungsschlitten 19' dementsprechend verfahren.

Nachfolgend wird der Ablauf des erfindungsgemäßen Verfahrens erläutert.

Zu Beginn sind die beiden Schleusen 11, 11' durch die äußeren Schleusentore 11a, 11'a und die inneren Schleusentore 11b, 11'b verschlossen. Die Bestrahlungsschlitten 19, 19' befinden sich in den Schleusen 11, 11'. Die Abdeckplatten 27 sind über die Kreuzschlitten 14 ,14' verfahren.

Die Rohreifen 17 werden auf den beiden Rollenreihen des Zubringers 2 flach liegend hintereinander entsprechend des Pfeils P₁ antransportiert. Jeder Rohreifen 17 wird am Endbereich des Zubringers 2, wie bereits beschrieben, von den Zentrierfinger 7 (Fig. 2) zentriert. Die Greifeinrichtung 6 und die Greifeinrichtung 6' nehmen abwechselnd die nacheinander am Zubringer 2 zentrierten Rohreifen 17 auf und werden nachfolgend zum Übergabetisch 3, 3' verschwenkt. Vor, bei oder nach der Aufnahme des Rohreifens 17 ermittelt die Greifeinrichtung 6, 6' mittels eines Scanners die Reifendimension des von ihr aufgenommenen Rohreifens 17 und wird zum Lagertisch 3, 3' verschwenkt. Während die Greifeinrichtung 6, 6' den Rohreifen 17 weiter festhält, nimmt sie vom Übergabetisch 3, 3' den für die jeweilige Reifendimension passenden Werkstückgreifer 9 auf. Die Greifeinrichtung 6, 6' wird zum Übergabetisch 4, 4' geschwenkt und setzt in eine der dortigen Ausnehmungen 8 den Werkstückgreifer 9 und auf diesem den Rohreifen 17 ab, wobei nachfolgend der Werkstückgreifer 9 von der Greifeinrichtung 6, 6' auseinandergefahren wird, sodass der Rohreifen 17 am Werkstückgeifer 9 aufspannt wird.

Auf den Übergabetischen 4, 4' werden bevorzugter Weise jeweils in beide Ausnehmungen 8 auf die beschriebene Weise Rohreifen 17 auf den passenden Werkstückgreifern 9 aufgespannt.

Nachfolgend erfasst die Greifeinrichtung 6" nacheinander und abwechselnd vom Übergabetisch 4 und vom Übergabetisch 4' Werkstückgreifer 9 inklusive aufgespanntem Rohreifen 17. Das äußere Schleusentor 11a der Schleuse 11 wird geöffnet und die Greifeinrichtung 6" setzt den Werkstückgreifer 9 mit aufgespanntem Rohreifen 14 in der oberen Schleuse 11 in die Schnellwechselaufnahme 15 des Bestrahlungsschlittens 19 ein. Die Greifeinrichtung 6" wird aus der Schleuse 11 herausbewegt, das äußere Schleusentor 11a wird geschlossen. Nachfolgend wird das innere Schleusentor 11b geöffnet, die dortige Abdeckplatte 27 weggeschoben, die Schnellwechselaufnahme 15 mittels des zugehörigen Antriebes 25 in Rotationsbewegung versetzt und der Bestrahlungsschlitten 19 mittels des zugehörigen Antriebes 25 in die Bestrahlungskammer 12 hineingeschoben. Das innere Schleusentor 11b wird geschlossen und der obere Antrieb 18 schiebt den Kreuzschlitten 14 und damit den Bestrahlungsschlitten 19 und den entsprechenden Rohreifen 17 vor das Bestrahlungsfenster 21a der Elektronenstrahlquelle 21. Der rotierende Rohreifen 17 wird mit Elektronen bestrahlt.

Nachdem die Greifeinrichtung 6" wie bereits erläutert einen Rohreifen 17 in der Schleuse 11 abgesetzt hat, erfasst sie einen vom Übergabetisch 4' stammenden Werkstückgreifer 9 mit dem nächsten Rohreifen 17, welcher nach Öffnen des äußeren Schleusentores 11'a der Schleuse 11' auf der Schnellwechselaufnahme 15 des dort befindlichen Bestrahlungsschlitten 19' gesetzt wird. Die Greifeinrichtung 6" wird aus der Schleuse 11' herausgefahren und das äußere Schleusentor 11a der Schleuse 11' wird wieder geschlossen.

Sobald die Bestrahlung des bereits in der Bestrahlungskammer 12 befindlichen Rohreifens 17 abgeschlossen ist, wird dieser Rohreifen 17 mit dem Kreuzschlitten 14 zurück vor das innere Schleusentor 11b der in Fig. 1 oberen Schleuse 11 gefahren. Das innere Schleusentor 11b wird geöffnet und der Bestrahlungsschlitten 19 zurück in die Schleuse 11 gefahren. Das innere Schleusentor 11b wird wieder geschlossen und die entsprechende Abdeckplatte 27 zurück vor das innere Schleusentor 11b geschoben. Gleichzeitig wird der in der anderen Schleuse 11' befindliche Bestrahlungsschlitten 19, 19', welcher einen noch nicht bestrahlten Rohreifen 17 trägt, nach Wegschieben der dortigen Abdeckplatte 27 in die Bestrahlungskammer 12 hineingefahren. Die beiden inneren Schleusentore 11b, 11'b werden geschlossen und nachfolgend wird das äußere Schleusentor 11a der Schleuse 11 geöffnet. Während der Bestrahlungsschlitten 19' vom Kreuzschlitten 14' zur Elektronenstrahlquelle 21 verfahren und der am Bestrahlungsschlitten 19 befindliche Rohreifen 17 auf die beschriebene Weise bestrahlt wird, nimmt die Greifeinrichtung 6" den in der Schleuse 11 befindlichen, den bereits vorvernetzten Rohreifen 17 tragenden Werkstückgreifer 9 von der Schnellwechselaufnahme 15 ab und transportiert diesen zurück zum Übergabetisch 4.

Mittels der Greifeinrichtung 6 wird der vorvernetzte Rohreifen 17 vom Werkstückgreifer 9 gelöst und nachfolgend auf die Fördereinrichtung 5 gelegt und von dieser abtransportiert.

Auf dem Übergabetisch 4 ist in der Zwischenzeit von der Greifeinrichtung 6 der nächste Rohreifen 17 auf einem Werkstückgreifer 9 positioniert und aufgespannt worden, sodass die Greifeinrichtung 6" unmittelbar nach dem Abladen des vorvernetzten Rohreifens 17 am Übergabetisch 4 gleich den nächsten auf einem Werkstückgreifer 9 aufgespannten Rohreifen 17 vom Übergabetisch 4 aufnimmt und in der in Fig. 1 oberen Schleuse 11 positioniert, deren äußeres Schleusentor 11a nachfolgend wieder geschlossen wird.

Entsprechend dem beschriebenem Verfahrensablauf, wird die Bestrahlungskammer 12 abwechselnd über die beiden Schleusen 11, 11' mit Rohreifen 17 beschickt.

Ein vollautomatischer Ablauf des erfindungsgemäßen Verfahrens ist durch eine entsprechende Rechnersteuerung sichergestellt. Die dazu erforderliche Hard- und Software sind nicht Gegenstand der Erfindung.

### Bezugszeichenliste

- 1 ......................: Strahlenschutzgehäuse
- 2 ......................: Zubringer
- 3, 3' .................: Lagertisch
- 4, 4' .................: Übergabetisch
- 5, 5' .................: Fördereinrichtung
- 6, 6', 6"...........: Greifeinrichtung
- 7 ......................: Zentrierfinger
- 8 ......................: Ausnehmung
- 9 ......................: Werkstückgreifer
- 10a ..................: Basis
- 10b ..................: Greifarm
- 10c ..................: Armsegment
- 10d ..................: Handhabungseinheit
- 11, 11' .............: Schleusen
- 11a, 11'a..........: äußeres Schleusentor
- 11b, 11'b .........: inneres Schleusentor
- 12 ....................: Bestrahlungskammer
- 13 ....................: Wand
- 14, 14' .............: Kreuzschlitten
- 15 ....................: Schnellwechselaufnahme
- 16 ....................: Schiene
- 17 ....................: Rohreifen
- 18 ....................: Antrieb
- 19, 19' .............: Bestrahlungsschlitten
- 20 ....................: Schiene
- 21 ....................: Elektronenstrahlquelle
- 21a ..................: Bestrahlungsfenster
- 22 ....................: Bleiplatte
- 23 ....................: Aussparung
- 24 ....................: Gewindespindel
- 25 ....................: Antriebe
- 26 ....................: Gewindespindel
- 27 ....................: Abdeckplatte
- a₁ .....................: Hauptachse
- P₁.....................: Pfeil (Transportrichtung)
- P₂, P₃, P₄ ..........: Doppelpfeil
- k₁, k₂, k₃...........: Kreis

## Patentansprüche

1. Vorrichtung zur Bereitstellung von Rohreifen (17) mit zumindest einem durch Elektronenstrahlen vorvernetzten Reifenbauteil umfassend:
- ein Strahlenschutzgehäuse (1) mit einer Bestrahlungskammer (12) mit einer Elektronenstrahlquelle (21) und zwei an einer Seite der Bestrahlungskammer (21) angrenzende Schleusen (11, 11'), **dadurch gekennzeichnet, dass**
- eine Schlittenanordnung pro Schleuse (11, 11'), wobei jede Schlittenanordnung einen Kreuzschlitten (14, 14') und einen Bestrahlungsschlitten (19, 19') umfasst, wobei sich die Kreuzschlitten (14, 14') unter dem Niveau der Schleusen (11, 11') zwischen den Schleusen (11, 11') und der Bestrahlungskammer (12) erstrecken und zur Elektronenstrahlquelle (21) verfahrbar sind,
wobei die Bestrahlungsschlitten (19, 19') am und gegenüber dem Kreuzschlitten (14, 14') verschiebbar und derart zwischen der jeweiligen Schleuse (11, 11') und der Bestrahlungskammer (12) bewegwegbar sind und
wobei auf jedem Bestrahlungsschlitten (19, 19') eine rotierbare Schnellwechselaufnahme (15) zur Aufnahme eines auf einem Werkstückgreifer (9) in Torusform aufgespannten Rohreifens (14) aufgesetzt ist,
- Fördereinrichtungen (2, 5', 5') zum An- und Abtransport der Rohreifen (17),
- Greifeinrichtungen (6, 6', 6") zur gleichzeitigen Handhabung mehrerer Rohreifen (17) und Werkstückgreifer (9) zwischen den Schleusen (11, 11') und den Fördereinrichtungen (2, 5', 5').

2. Vorrichtung nach Anspruch 1, **dadurch gekennzeichnet, dass** die rotierbare Schnellwechselaufnahme (15) mit einem, insbesondere über Zahnstangen oder Kardanwellen ankoppelbaren Antrieb (18) um die Hauptachse (a₁) des Reifens (17) in Rotationsbewegung versetzbar ist.

3. Vorrichtung nach Anspruch 2, **dadurch gekennzeichnet, dass** der Antrieb (18) außerhalb der Bestrahlungskammer (12) angeordnet ist.

4. Vorrichtung nach einem der Ansprüche 1 bis 3, **dadurch gekennzeichnet, dass** durch den Kreuzschlitten (14, 14') und den Bestrahlungsschlitten (19, 19') jeder Schlittenanordnung zumindest eine in Rotationsbewegung versetzbare Gewindespindel (24, 26) durchgeführt ist, durch deren Rotationsbewegung jeder Schlitten (14, 14', 19, 19') der Schlittenanordnung verfahrbar ist.

5. Vorrichtung nach einem der Ansprüche 1 bis 4, **dadurch gekennzeichnet, dass** jeder Schlitten (14, 14', 19, 19') der Schlittenanordnung mittels eines außerhalb des Strahlenschutzgehäuses (1) befindlichen Antriebes (18, 25) in Bewegung versetzbar ist.

6. Vorrichtung nach einem der Ansprüche 1 bis 5, **dadurch gekennzeichnet, dass** in der Bestrahlungskammer (12) unmittelbar hinter den Schleusen (11, 11') jeweils eine insbesondere aus Blei bestehende verschiebbare Abdeckplatte (27) angeordnet ist, mittels welcher bei in der Schleuse (11, 11') befindlichem Bestrahlungsschlitten (19, 19') der in der Bestrahlungskammer (1) befindliche Teil des Kreuzschlittens (14, 14') abdeckbar ist.

7. Vorrichtung nach einem der Ansprüche 1 bis 6, **dadurch gekennzeichnet, dass** vor den Schleusen (11, 11') zwei Übergabetische (4, 4') anordnet sind, auf welchen die Rohreifen (17), insbesondere jeweils zwei Rohreifen, auf den Werkstückgreifern (9) positionerbar sind.

8. Vorrichtung nach einem der Ansprüche 1 bis 7 **dadurch gekennzeichnet, dass** sie Lagertische (3, 3') aufweist, auf welchen mehrere, insbesondere zumindest drei, Werkstückgreifer (9) nebeneinander lagerbar sind.

9. Vorrichtung nach einem der Ansprüche 1 bis 8, **dadurch gekennzeichnet, dass** die Werkstückgreifer (9) in unterschiedlichen auf die Zollgrößen der Reifen abgestimmten Größen verfügbar sind, wobei vorzugsweise von jedem Werkstückgreifer (9) Rohreifen (17) in einem definierten Zollgrößenbereich erfassbar sind.

10. Vorrichtung nach einem der Ansprüche 1 bis 9, **dadurch gekennzeichnet, dass** die Greifeinrichtungen (6, 6', 6") rotierbar, insbesondere schwenkbar, sind und Handhabungseinheiten (10d) zur gleichzeitigen Handhabung von Rohreifen (17) und Werkstückgreifer (9) aufweisen.

11. Verfahren zur Bereitstellung von Rohreifen (17) mit zumindest einem durch Elektronenstrahlen vorvernetzten Reifenbauteil mit folgenden nacheinander ablaufenden Schritten:
a. Bereitstellen von einer Vorrichtung nach Anspruch 1,
b. Abwechselndes Positionieren einzelner Rohreifen (17) in einer ersten und einer zweiten Schleuse (11, 11'), welche jeweils an eine Bestrahlungskammer (12) angrenzt,
c. Einbringen eines Rohreifens (17) aus der ersten Schleuse (11) in die Bestrahlungskammer (12),
d. Positionieren des in die Bestrahlungskammer (12) eingebrachten Rohreifens (17) vor einer Elektronenstrahlquelle (21) und Vorvernetzen des Rohreifens (17) durch Bestrahlen mit Elektronenstrahlen,
e. Rücktransport des vorvernetzten Rohreifens (17) in die erste Schleuse (11) und gleichzeitiges Einbringen eines weiteren Rohreifens (17) aus der zweiten Schleuse (17') in die Bestrahlungskammer (12),
f. Vorvernetzen des weiteren Rohreifens (17) gemäß Schritt c) und Abtransport des bereits vorvernetzten Rohreifens (17) aus der ersten Schleuse (11),
g. Zurücktransportieren des weiteren vorvernetzten Rohreifens (17) in die zweite Schleuse (17') und nachfolgender Abtransport des weiteren Rohreifens (17) aus der zweiten Schleuse (17'),
h. Wiederholung der Schritte a) bis f) mit weiteren Rohreifen

12. Verfahren nach Anspruch 11, **dadurch gekennzeichnet, dass** in Schritt c) der Rohreifen (17) während des Bestrahlens rotiert wird.

13. Verfahren nach Anspruch 11 oder 12, **dadurch gekennzeichnet, dass** die Rohreifen (17) vor Schritt a) auf Werkstückgreifern (9) aufgespannt werden und während der Schritte a) bis f) auf den Werkstückgreifern (9) aufgespannt bleiben, welche innerhalb der Schleusen (11, 11') und innerhalb der Bestrahlungskammer (12) in Schnellwechselaufnahmen (15) eingesetzt mittels einer Schlittenanordnung (11, 14; 11', 14') transportiert werden.

14. Verfahren nach einem der Ansprüche 11 bis 13, **dadurch gekennzeichnet, dass** die ausgeschleusten vorvernetzten Rohreifen (17) von den Werkstückgreifern (9) abgenommen und abtransportiert werden.

## Claims

1. Apparatus for providing tyre blanks (17) with at least one tyre component which is pre-crosslinked by way of electron beams, comprising:
- a radiation protection housing (1) with an irradiation chamber (12) with an electron beam source (21) and two airlocks (11, 11') which are adjacent on one side of the irradiation chamber (21), **characterized in that**
- one slide arrangement per airlock (11, 11'), each slide arrangement comprising a cross-slide (14, 14') and a radiation slide (19, 19'), the cross-slides (14, 14') extending below the level of the airlocks (11, 11') between the airlocks (11, 11') and the irradiation chamber (12) and being capable of being moved with respect to the electron beam source (21), it being possible for the irradiation slides (19, 19') to be displaced on and with respect to the cross-slides (14, 14') and to be moved in this way between the respective airlock (11, 11') and the irradiation chamber (12), and
a rotatable quick-change receptacle (15) for receiving a tyre blank (14) which is clamped in a torus shape on a workpiece gripper (9) being placed on each irradiation slide (19, 19'),
- conveying devices (2, 5', 5') for transporting the tyre blanks (17) in and out,
- gripping devices (6, 6', 6") for the simultaneous handling of a plurality of tyre blanks (17) and workpiece grippers (9) between the airlocks (11, 11') and the conveying devices (2, 5', 5').

2. Apparatus according to Claim 1, **characterized in that** the rotatable quick-change receptacle (15) can be set in a rotational movement about the main axis (a₁) of the tyre (17) by way of a drive (18) which can be coupled, in particular, via racks or cardan shafts.

3. Apparatus according to Claim 2, **characterized in that** the drive (18) is arranged outside the irradiation chamber (12).

4. Apparatus according to one of Claims 1 to 3, **characterized in that** at least one threaded spindle (24, 26) which can be set in a rotational movement is guided through the cross-slides (14, 14') and the irradiation slides (19, 19') of each slide arrangement, by way of the rotational movement of which threaded spindle (24, 26) each slide (14, 14', 19, 19') of the slide arrangement can be moved.

5. Apparatus according to one of Claims 1 to 4, **characterized in that** each slide (14, 14', 19, 19') of the slide arrangement can be set in motion by means of a drive (18, 25) which is situated outside the radiation protection housing (1).

6. Apparatus according to one of Claims 1 to 5, **characterized in that** in each case one displaceable covering plate (27) which consists in particular of lead is arranged in the irradiation chamber (12) directly behind the airlocks (11, 11'), by means of which covering plate (27), in the case of an irradiation slide (19, 19') being situated in the airlock (11, 11'), that part of the cross-slide (14, 14') which is situated in the irradiation chamber (1) can be covered.

7. Apparatus according to one of Claims 1 to 6, **characterized in that** two transfer tables (4, 4') are arranged in front of the airlocks (11, 11'), on which transfer tables (4, 4') the tyre blanks (17), in particular in each case two tyre blanks, can be positioned on the workpiece grippers (9).

8. Apparatus according to one of Claims 1 to 7, **characterized in that** it has storing tables (3, 3'), on which a plurality of, in particular at least three, workpiece grippers (9) can be stored next to one another.

9. Apparatus according to one of Claims 1 to 8, **characterized in that** the workpiece grippers (9) are available in different sizes which are adapted to the size in inches of the tyres, it preferably being possible for tyre blanks (17) in a defined range of sizes in inches to be gripped by each workpiece gripper (9).

10. Apparatus according to one of Claims 1 to 9, **characterized in that** the gripping devices (6, 6', 6") can be rotated, in particular can be pivoted, and have handling units (10d) for the simultaneous handling of blank tyres (17) and workpiece grippers (9).

11. Method for providing tyre blanks (17) with at least one tyre component which is pre-crosslinked by way of electron beams, with the following steps which take place consecutively:
a. providing of an apparatus according to Claim 1,
b. alternating positioning of individual tyre blanks (17) in a first and a second airlock (11, 11') which in each case adjoin an irradiation chamber (12),
c. introducing of a tyre blank (17) from the first airlock (11) into the irradiation chamber (12),
d. positioning of the tyre blank (17) which is introduced into the irradiation chamber (12) in front of an electron beam source (21), and pre-crosslinking of the tyre blank (17) by way of irradiation with electron beams,
e. transporting of the pre-crosslinked tyre blank (17) back into the first airlock (11), and simultaneous introducing of a further tyre blank (17) from the second airlock (17') into the irradiation chamber (12),
f. pre-crosslinking of the further tyre blank (12) according to step c), and transporting of the tyre blank (17) which has already been pre-crosslinked away from the first airlock (11),
g. transporting of the further pre-crosslinked tyre blank (17) back into the second airlock (17'), and subsequent transporting of the further tyre blank (17) away from the second airlock (17'),
h. repeating of steps a) to f) with further tyre blanks.

12. Method according to Claim 11, **characterized in that**, in step c), the tyre blank (17) is rotated during the irradiation.

13. Method according to Claim 11 or 12, **characterized in that** the tyre blanks (17) are clamped on workpiece grippers (9) before step a), and remain clamped during steps a) to f) on the workpiece grippers (9) which are transported by means of a slide arrangement (11, 14; 11', 14') in a manner which is inserted in quick-change receptacles (15) within the airlocks (11, 11') and within the irradiation chamber (12).

14. Method according to one of Claims 11 to 13, **characterized in that** the ejected pre-crosslinked tyre blanks (17) are removed from the workpiece grippers (9) and are transported away.

## Revendications

1. Système de fourniture de pneus bruts (17) comprenant au moins un composant de pneu préréticulé par des rayons électroniques, comprenant :
- un boîtier de protection contre le rayonnement (1) comprenant une chambre d'irradiation (12) pourvue d'une source de rayons électroniques (21) et de deux sas de transfert (11, 11') adjacents à un côté de la chambre d'irradiation (21),
**caractérisé en ce que**
- un arrangement de chariots par sas de transfert (11, 11'), chaque arrangement de chariots comportant un chariot en croix (14, 14') et un chariot d'irradiation (19, 19'), les chariots en croix (14, 14') s'étendant sous le niveau des sas de transfert (11, 11') entre les sas de transfert (11, 11') et la chambre d'irradiation (12) et pouvant être déplacé vers la source de rayons électroniques (21), les chariots d'irradiation (19, 19') pouvant coulisser contre les chariots en croix (14, 14') et par rapport à ceux-ci et pouvant ainsi se déplacer entre le sas de transfert (11, 11') respectif et la chambre d'irradiation (12) et un logement de changement rapide (15) rotatif destiné à accueillir un pneu brut (14) fixé en forme de tore sur un préhenseur de pièce ouvrée (9) étant posé sur chaque chariot d'irradiation (19, 19'),
- des dispositifs de transport (2, 5', 5') pour l'amenée et l'évacuation du pneu brut (17),
- des dispositifs de préhension (6, 6', 6") destinés à manipuler simultanément plusieurs pneus bruts (17) et préhenseurs de pièce ouvrée (9) entre les sas de transfert (11, 11') et les dispositifs de transport (2, 5', 5').

2. Système selon la revendication 1, **caractérisé en ce que** le logement de changement rapide (15) rotatif peut être amené en un mouvement de rotation autour de l'axe principal (a₁) du pneu (17) par un mécanisme d'entraînement (18), pouvant notamment être accouplé par le biais de crémaillères ou d'arbres à cardan.

3. Système selon la revendication 2, **caractérisé en ce que** le mécanisme d'entraînement (18) est disposé en dehors de la chambre d'irradiation (12).

4. Système selon l'une des revendications 1 à 3, **caractérisé en ce qu'**à travers les chariots en croix (14, 14') et les chariots d'irradiation (19, 19') de chaque arrangement de chariots passe au moins une tige filetée (24, 26) qui peut être amenée en un mouvement de rotation et dont le mouvement de rotation permet de déplacer chaque chariot (14, 14', 19, 19').

5. Système selon l'une des revendications 1 à 4, **caractérisé en ce que** chaque chariot (14, 14', 19, 19') de l'arrangement de chariots peut être mis en mouvement au moyen d'un mécanisme d'entraînement (18, 25) qui se trouve en dehors du boîtier de protection contre le rayonnement (1).

6. Système selon l'une des revendications 1 à 5, **caractérisé en ce qu'**une plaque de recouvrement (27) coulissante, notamment constituée de plomb, est respectivement disposée dans la chambre d'irradiation (12) directement derrière les sas de transfert (11, 11'), au moyen de laquelle peut être recouverte la partie du chariot en croix (14, 14') qui se trouve dans la chambre d'irradiation (1) lorsque les chariots d'irradiation (19, 19') se trouvent dans le sas de transfert (11, 11').

7. Système selon l'une des revendications 1 à 6, **caractérisé en ce que** deux tables de transfert (4, 4') sont disposées devant les sas de transfert (11, 11'), sur lesquelles les pneus bruts (17), notamment à chaque fois deux pneus bruts, peuvent être positionnés sur les préhenseurs de pièce ouvrée (9).

8. Système selon l'une des revendications 1 à 7, **caractérisé en ce qu'**il possède des tables de stockage (3, 3') sur lesquelles peuvent être stockés les uns à côté des autres plusieurs, notamment au moins trois, préhenseurs de pièce ouvrée (9).

9. Système selon l'une des revendications 1 à 8, **caractérisé en ce que** les préhenseurs de pièce ouvrée (9) sont disponibles dans différentes dimensions adaptées aux tailles des pneus, des pneus bruts (17) dans une plage de tailles définie pouvant être saisis par chaque préhenseur de pièce ouvrée (9).

10. Système selon l'une des revendications 1 à 9, **caractérisé en ce que** les dispositifs de préhension (6, 6', 6") sont rotatifs, notamment pivotants, et possèdent des unités de manipulation (10d) destinées à la manipulation simultanée des pneus bruts (17) et des préhenseurs de pièce ouvrée (9).

11. Procédé de fourniture de pneus bruts (17) comprenant au moins un composant de pneu préréticulé par des rayons électroniques, comprenant les étapes suivantes exécutées successivement :
a. fourniture d'un système selon la revendication 1,
b. positionnement en alternance de pneus bruts (17) individuels dans un premier et un deuxième sas de transfert (11, 11'), qui sont respectivement adjacents d'une chambre d'irradiation (12),
c. introduction d'un pneu brut (17) depuis le premier sas de transfert (11) dans la chambre d'irradiation (12),
d. positionnement du pneu brut (17) introduit dans la chambre d'irradiation (12) devant une source de rayons électroniques (21) et préréticulation du pneu brut (17) par irradiation avec des rayons électroniques,
e. transport de retour du pneu brut (17) préréticulé dans le premier sas de transfert (11) et, simultanément, introduction d'un pneu brut (17) supplémentaire depuis le deuxième sas de transfert (17') dans la chambre d'irradiation (12),
f. préréticulation du pneu brut (17) supplémentaire selon l'étape c) et évacuation du pneu brut (17) déjà préréticulé hors du premier sas de transfert (11),
g. transport de retour du pneu brut (17) supplémentaire préréticulé dans le deuxième sas de transfert (17') et évacuation du pneu brut (17) déjà préréticulé hors du deuxième sas de transfert (17'),
h. répétition des étapes a) à f) avec des pneus bruts supplémentaires.

12. Procédé selon la revendication 11, **caractérisé en ce qu'**à l'étape c), le pneu brut (17) est mis en rotation pendant l'irradiation.

13. Procédé selon la revendication 11 ou 12, **caractérisé en ce qu'**avant l'étape a), les pneus bruts (17) sont fixés sur des préhenseurs de pièce ouvrée (9) et restent fixés sur les préhenseurs de pièce ouvrée (9) pendant les étapes a) à f), lesquels sont transportés à l'intérieur des sas de transfert (11, 11') et à l'intérieur de la chambre d'irradiation (12) au moyen d'un arrangement de chariots (11, 14 ; 11', 14') en étant insérés dans des logements de changement rapide (15).

14. Procédé selon l'une des revendications 11 à 13, **caractérisé en ce que** les pneus bruts (17) préréticulés sortant du sas de transfert sont déposés des préhenseurs de pièce ouvrée (9) puis emportés.
